# EUROPÄISCHE PATENTSCHRIFT

(11) **EP 0 613 536 B1**
(45) Veröffentlichungstag und Bekanntmachung des Hinweises auf die Patenterteilung: **02.08.1995**
(21) Anmeldenummer: 92923257.7
(22) Anmeldetag: 12.11.1992
(51) Int. Cl.: F16K 49/00, C21B 9/12

(54) **ABSPERRVORRICHTUNG FÜR MEDIEN HOHER TEMPERATUR**
OBTURATOR FOR MEDIA AT HIGH TEMPERATURES
DISPOSITIF D'ARRET POUR DES FLUIDES A HAUTE TEMPERATURE

(30) Priorität: 21.11.1991 DE 4138283
(43) Veröffentlichungstag der Anmeldung: 07.09.1994
(73) Patentinhaber: Zimmermann & Jansen GmbH, D-52322 Düren (DE)
(72) Erfinder: IRNICH, Franz, Josef, D-5165 Hürtgenwald-Gey (DE); JÖRRES, Heinz, D-5160 Düren-Birgel (DE)
(74) Vertreter: Behrendt, Arne, Dipl.-Ing.
(86) Internationale Anmeldenummer: EP9202596
(87) Internationale Veröffentlichungsnummer: WO9310388

(56) Entgegenhaltungen:
- DE-A- 2 322 266
- DE-A- 2 364 915
- DE-B- 2 328 085
- GB-A- 599 923
- GB-A- 2 150 669

## Beschreibung

Die Erfindung betrifft eine Absperrvorrichtung für gasförmige Medien hoher Temperatur, insbesondere zur Absperrung der Heizgaßleitungen, die von einem Winderhitzer zu einem Hochofen führen, bestehend aus einem Gehäuse mit durch ein Kühlmedium gekühlten Dichtsitzen und einem in dem Gehäuse beweglich angeordneten, durch ein Kühlmedium gekühlten Absperrorgan, wobei mit Ausnahme der Gehäusedichtsitze und der Dichtflächen am Absperrorgan alle mit dem Heißgas in Berührung kommenden Flächen mit einer feuerfesten Beschichtung versehen sind.

Eine derartige Absperrvorrichtung ist beispielsweise aus der DE-A-23 28 085 bekannt.Bei den Heißgasklappen oder Heißwindschiebern der eingangs genannten Art ist es üblich die feuerfeste Auskleidung zumindest teilweise wärmeisolierend auszubilden, um auf diese Weise die an solchen Armaturen oft beträchtlichen Energieverluste zu vermindern. Aus diesen Gründen der Energieersparnis ist es auch bekannt, die Wärmeverluste bei der Kühlung der Absperrorgane, der Gehäusedichtsitze und der Dichtflächen am Absperrorgan möglichst klein zu halten, und zwar darurch, daß man die Kühlleistung steuerbar und jeweils nur so groß macht, daß die Temperatur der gekühlten Flächen nur wenig unterhalb der zulässigen Temperaturobergrenze bleibt.

Ein anderes Problem ist bei solchen Heißwindarmaturen besteht darin, daß die feuerfesten Auskleidungen und die tragende Metallkonstruktion einer verhältnismäßig schnell fortschreitenden Korrosion unterliegen. Systemistsche Untersuchungen haben ergeben, daß es sich Bei dieser Korrosion im wesentlichen um Säurekorrosion handelt. Die Säure stammt aus den sauren Bestandteilen der für die Wärmeerzeugung verwendeten Heizgase. Diese Säure schlägt sich nieder, wenn sich irendwo in der Absperrvorrichtung dauerhaft ein Temperaturniveau einstellt, welches unterhalb des Säuretaupunktes liegt.

Es ist Aufgabe der Erfindung, die Absperrvorrichtung der eingang genannten Art dahingehend weiterzubilden, daß der Verschleiß durch Säurekorrosion weitestgehend unterbunden wird.

Zur Lösung dieser Aufgabe schlägt die Erfindung ausgehend von der Vorrichtung der eingangs genannnten Art vor, daß zumindest alle mit dem Heißgas in Berührung kommenden ungekühlten Flächen der Absperrvorrichtung mit einer hoch wärmedämmenden Zusatzisolierung versehen sind, die zwischen der feuerfesten Beschichtung und der Metallkonstruktion angeordnet ist.

Es hat sich überrraschender Weise herausgestellt, daß die beim Stand der Technik unvermeidbare Säurekorrosion weniger im Bereich der vom Kühlmittel gekühlten Flächen als im Bereich der ungekühlt bleibenden Flächen auftritt. Dies ist wahrscheinlich darauf zurückzuführen, daß die vom Kühlmittel gekühlten Oberflächen trotz Verwendung des Kühlmittels niemals oder nur selten und dann nur kurzzeitig den Säuretaupunkt unterschreiten. Jedenfalls kann die Kühlleistung im Bereich der gekühlten Flächen jeweils so gesteuert werden, daß Säuretaupunktunterschreitungen praktisch nicht vorkommen. Demgegenüber sind die ungekühlt bleibenden und mit dem Heißgas in Berührung kommenden Oberflächen wegen des unkontrollierten Wärmeabflusses oft wesentlich kühler, so daß es dort vermehrt zu einem starken Säureniederschlag kommt. Hier schafft die Erfindung dadurch Abhilfe, daß durch zusätzliche Wärmedämmungsmaßnahmen die inneren Oberflächen der ungekühlt verbleibenden Bereiche der Armatur so warmgehalten werden, so daß es dort zu keinem Säureniederschlag mehr kommen kann.

Eine vorteilhafte Ausführungsform der Erfindung sieht vor, daß die hoch wärmende Zusatzisolierung aus dünnen Mineralfasermatten besteht. Solche Mineralfasermatten haben eine außerordentlich hohe Wärmedämmung und können ohne weiteres so fest mit der Metallkonstruktion verbunden werden, so daß es möglich ist, auf diese Zusatzisolierung die normale feuerfeste Beschichtung aufzubringen.

Bei einer Absperrvorrichtung, bei welcher das Absperrorgan als linear verschiebbare Schieberplatte ausgebildet ist und das Gehäuse mit einer feuerfest ausgekleideten Haube versehen ist, in die die Schieberplatte in der Öffnungsstellung einschiebbar ist, wird erfindungsgemäß auch die Haube mit der hoch wärmedämmenden Zusatzisolierung zwischen der feuerfesten Beschichtung und der Metallkonstruktion versehen. Die Haube liegt zwar nicht unmittelbar im Heißgasstrom. Dennoch kann nicht vermieden werden, daß bei Öffnungsstellung der Schieberplatte Heißgas in die Haube eindringt und sich dort an den verhältnismäßig kühl bleibenden Innenflächen niederschlägt, wenn nicht die erfindungsgemäß vorgeschlagene Zusatzisolierung vorhanden wäre.

Eine vorteilhafte Weiterbildung der Erfindung sieht vor, daß auch die mit Heißgas in Berührung kommenden gekühlten Flächen des Absperrorgans zumindest teilweise mit einer hoch wärmedämmenden Zusatzisolierung versehen sind. So ist es beispielsweise möglich, den gesamten Flächenbereich des Absperrorganes (Schieberplatte oder Klappe) mit einer solchen Zusatzisolierung zu versehen. Diese Zusatzisolierung im Bereich der gekühlten Flächen muß natürlich bei der Steuerung der Kühlmittelzufuhr entsprechend berücksichtigt werden. Insgesamt lassen sich durch die zuletzt genannte Maßnahme die Energieverluste auch im Bereich der gekühlten Flächen erheblich vermindern.

Die direkt im Heißgasstrom liegenden Flächen sind zweckmäßig innen mit einem dichten Feuerbeton verkleidet, der die in diesem Bereich besonders zu befürchtende mechanische Erosion unterbindet.

Demgegenüber sind die nicht im Heißgasstrom liegenden Flächen, z.B. die Innenflächen der Haube, innen mit Feuerleichtbeton verkleidet. Ein solcher Feuerleichtbeton ist zwar nicht so erosionsfest, hat dafür aber eine bessere Wärmedämmung.

Ein Ausführungsbeispiel der Erfindung wird im folgenden anhand der Zeichnung näher erläutert. Es zeigen:
- Fig. 1: eine als Heißwindschieber ausgebildete Absperrvorrichtung gemäß der Erfindung in einer ersten Ausführungsform im Schnitt parallel zur Strömungsrichtung;
- Fig. 2: die in Fig. 1 dargestellte Absperrvorrichtung in einem Schnitt quer zur Strömungsrichtung;
- Fig. 3: in gleicher Darstellung wie Fig. 1 eine Absperrvorrichtung gemäß der Erfindung, die auch im Bereich des Absperrorganes mit einer Zusatzisolierung versehen ist.

In der Zeichnung ist das im wesentlichen kreisrund ausgebildete Schiebergehäuse mit dem Bezugszeichen 1 bezeichnet. Das Schiebergehäuse 1 weist innen zwei von Kühlmittel durchströmte ringförmige Dichtsitze 2 und 3 auf, die in Durchströmungsrichtung einen Abstand voneinander haben und in radialer Richtung möglichst schmal ausgebildet sind, um die Wärmeverluste zu minimieren. Zwischen die Dichtsitze 2 und 3 ist eine als Absperrorgan dienende Schieberplatte 4 einschiebbar. Diese Schieberplatte 4 ist als Hohlkörper ausgebildet und innen mit spiralförmig verlaufenden Kühlmittelkanälen versehen, die von einem Kühlmittel, insbesondere von Kühlwasser, durchströmt werden. Am äußeren Umfang der Schieberplatte 4 befinden sich an einem ringförmigen Hohlkörper 5 die Dichtflächen 6 und 7 der Schieberplatte 4. Der Hohlkörper 5 ist in den Kühlwasserkreislauf der Schieberplatte 4 einbezogen und ist - ebenso wie die Dichtsitze 2 und 3 - in radialer Richtung sehr schmal ausgebildet, um die Wärmeverluste klein zu halten.

Die Schieberplatte 4 ist an zwei Schubstangen 8 und 9 aufgehängt, die hohl ausgebildet sind und zugleich der Zu- und Abfuhr von Kühlmittel dienen. Die Schubstangen 8 und 9 verlaufen durch eine an der Oberseite des Gehäuses 1 angeflanschte Haube 10, die so geformt und bemessen ist, daß sie bei Öffnungsstellung der Absperrvorrichtung die Schieberplatte 4 aufnehmen kann.

An der Oberseite der Haube 10 ist ein hydraulischer Verstellmechanismus 11 befestigt, dessen Verstellorgan über die Schubstangen 8 und 9 mit der Schieberplatte 4 in Verbindung steht. An den Durchtrittsstellen der Schubstangen 8 und 9 an der Oberseite der Haube 4 sind geeignete Abdichtbüchsen 12 und 13 befestigt, die den Austritt von Heißgas an der Oberseite der Haube 10 unterbinden. Die Haube 10 ist an ihrer Außenseite mit Kühl- und Verstärkungsrippen 14 versehen.

Mit Ausnahme der schmalen Dichtsitze 2 und 3 unter der ebenfalls schmalen Dichtflächen 6 und 7 der Schieberplatte 4 sind alle mit dem Heißgas in Berührung kommenden Innenflächen der Vorrichtung mit feuerfesten Beschichtungen versehen. Und zwar sind alle direkt im Heißgasstrom liegenden Flächen, d.h. also die Schieberplatte 4 und die Innenwandung des Gehäuses 1, mit einer hinreichend dicken Schicht aus einem dichten und mechanisch besonders beständigen Feuerbeton 15 beschichtet. Die nicht unmittelbar mit dem Heißgas in Berührung kommenden Innenflächen, wie z.B. die Innenflächen der Haube 10 und die weiter außen liegenden Bereiche des Gehäuses 1 sind demgegenüber mit einem Feuerleichtbeton 16 verkleidet, der zwar mechanisch nicht so fest ist, aber eine besonders gute Wärmedämmung hat.

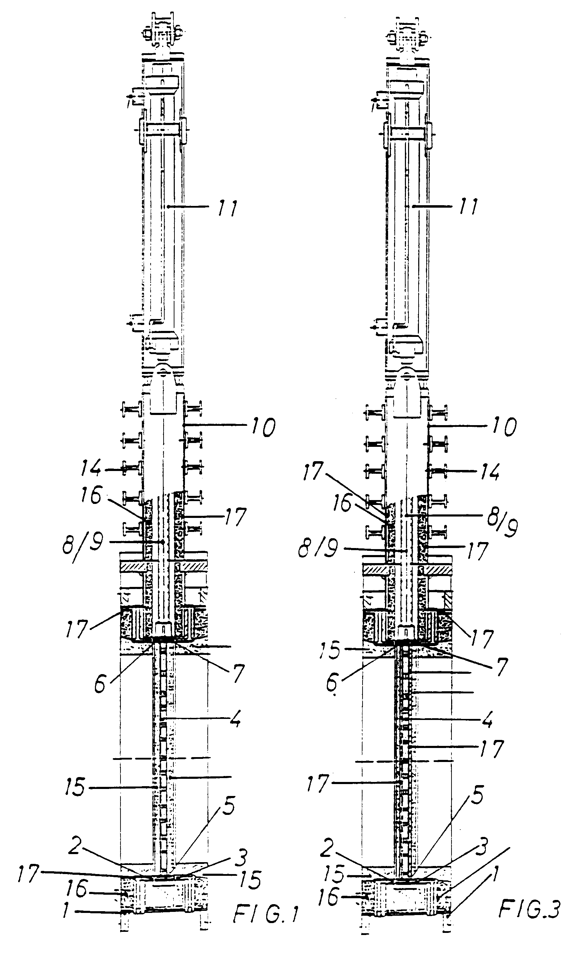

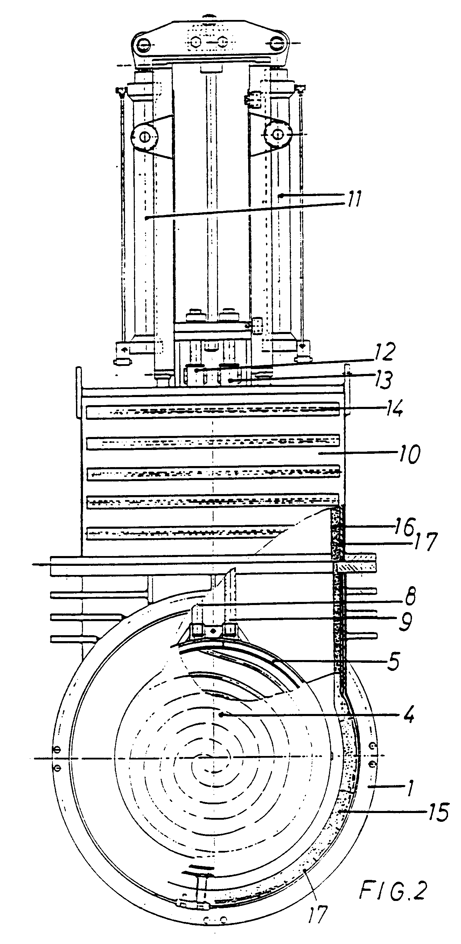

Erfindungsgemäß sind nun, wie in den Fig. 1 und 2 dargestellt, zumindest die ungekühlt bleibenden Flächen mit einer Zusatzisolierung 17 versehen. Diese Zusatzisolierung 17 besteht aus dünnen, hoch wärmedämmenden Mineralfasermatten, die zwischen die tragende Metallkonstruktion und die feuerfeste Beschichtung 15, 16 eingebracht sind.

Aufgrund dieser Zusatzisolierung 17 findet auch im Bereich der ungekühlt bleibenden Flächen kein unkontrollierter Wärmeabfluß mehr statt, so daß sichergestellt wird, daß auch im Bereich der ungekühlt bleibenden Flächen das Temperaturniveau der inneren Oberflächen bei allen Betriebsbedingungen so hochgehalten werden kann, daß ein Säureniederschlag zuverlässig unterbunden werden kann. Letzteres gilt insbesondere für die großen Innenflächen der Haube 10.

In den übrigen, vom Kühlmittel gekühlten Flächenbereichen ist es durch eine entsprechende Steuerung der Kühlleistung ohne weiteres möglich, auch hier dafür zu sorgen, daß an den mit dem Heißgas in Berührung kommenden Oberflächen die Temperatur oberhalb des Säuretaupunktes bleibt. Bei der Vorrichtung gemäß der Erfindung kann deshalb ohne weiteres der sonst bei solchen Absperrvorrichtungen am tiefsten Punkt vorgesehene Ablaßstutzen für flüssige Kondensate weggelassen werden.

Beim Ausführungsbeispiel nach der Fig. 1 sind nicht nur die ungekühlt bleibenden Flächen mit der Zusatzisolierung 17 versehen. Diese Zusatzisolierung befindet sich dort auch im Bereich der gekühlten Flächen, z.B. im Flächenbereich der Schieberplatte 4. Diese zusätzliche Isolierung muß natürlich bei der Einstellung der Kühlleistung entsprechend berücksichtigt werden. Durch diese zusätzliche Maßnahme können Wärmeverluste im Bereich des Kühlwasserkreislaufes erheblich reduziert werden.

## Patentansprüche

1. Absperrvorrichtung für gasförmige Medien hoher Temperatur, insbesondere zur Absperrung der Heißgasleitungen, die von Winderhitzern zu einem Hochofen führen, bestehend aus einem Gehäuse (1) mit durch ein Kühlmedium gekühlten Dichtsitzen (2, 3) und einem in dem Gehäuse (1) beweglich angeordneten, durch ein Kühlmedium gekühlten Absperrorgan (4), wobei mit Ausnahme der Gehäusedichtsitze (2, 3) und der Dichtflächen (6, 7) am Absperrorgan (4) alle mit dem Heißgas in Berührung kommenden Flächen mit einer feuerfesten Beschichtung (15, 16) versehen sind, **dadurch gekennzeichnet**, daß zumindest alle mit dem Heißgas in Berührung kommenden ungekühlten Flächen der Absperrvorrichtung mit einer hoch wärmedämmenden Zusatzisolierung (17) versehen sind, die zwischen der feuerfesten Beschichtung (15, 16) und der Metallkonstruktion angeordnet ist.

2. Vorrichtung nach Anspruch 1, dadurch gekennzeichnet, daß die hoch wärmedämmende Zusatzisolierung (17) aus dünnen Mineralfasernmatten besteht.

3. Absperrvorrichtung nach den Ansprüchen 1 und 2, bei welcher das Absperrorgan (4) als linear verschiebbare Schieberplatte ausgebildet ist und das Gehäuse (1) mit einer feuerfest ausgekleideten Haube (10) versehen ist, in die die Schieberplatte in der Öffnungsstellung einschiebbar ist, dadurch gekennzeichnet, daß auch die Haube (10) mit der hoch wärmedämmenden Zusatzisolierung (17) zwischen der feuerfesten Beschichtung (16) und der Metallkonstruktion versehen ist.

4. Vorrichtung nach einem der Ansprüche 1 bis 3, dadurch gekennzeichnet, daß auch die mit dem Heißgas in Berührung kommenden gekühlten Flächen des Absperrorganes (4) zumindest teilweise mit einer hoch wärmedämmenden Zusatzisolierung (17) versehen sind.

5. Vorrichtung nach einem der Ansprüche 1 bis 4, dadurch gekennzeichnet, daß die direkt im Heißgasstrom liegenden Flächen mit dichtem Feuerbeton (15) verkleidet sind.

6. Vorrichtung nach einem der Ansprüche 1 bis 4, dadurch gekennzeichnet, daß die nicht im Heißgasstrom liegenden Flächen innen mit Feuerleichtbeton (16) verkleidet sind.

## Claims

1. A shut-off device for gaseous media at high temperature, in particular for shutting off the hot gas conduits which lead from blast air heaters to a blast furnace, comprising a housing (1) with sealing seats (2, 3) cooled by a coolant and a shut-off member (4) arranged movably in the housing (1) and cooled by a coolant, wherein with the exception of the housing sealing seats (2, 3) and the sealing surfaces (6, 7) on the shut-off member (4) all surfaces which come into contact with the hot gas are provided with a refractory coating (15, 16), characterised in that at least all uncooled surfaces of the shut-off device, which come into contact with the hot gas, are provided with an additional insulation (17) which has a high thermal insulation action and which is disposed between the refractory coating (15, 16) and the metal structure.

2. A device according to claim 1 characterised in that the additional insulation (17) which has a high thermal insulation action comprises thin mineral fibre mats.

3. A shut-off device according to claims 1 and 2 wherein the shut-off member (4) is in the form of a linearly displaceable slider plate and the housing (1) is provided with a hood (10) having a refractory lining and into which the slider plate can be slid in the open position characterised in that the hood (10) is also provided with the additional insulation (17) which has a high thermal insulation action between the refractory coating (16) and the metal structure.

4. A device according to one of claims 1 to 3 characterised in that the cooled surfaces of the shut-off member (4), which come into contact with the hot gas, are also at least partially provided with an additional insulation (17) which has a high thermal insulation action.

5. A device according to one of claims 1 to 4 characterised in that the surfaces which lie directly in the hot gas flow are clad with dense refractory concrete (15).

6. A device according to one of claims 1 to 4 characterised in that the surfaces which do not lie in the hot gas flow are internally clad with refractory lightweight concrete (16).

## Revendications

1. Dispositif d'arrêt pour des milieux gazeux de température élevée, notamment pour fermer des conduits de gaz chauds qui s'étendant des récupérateurs vers un haut fourneau, constitué d'un boîtier (1) avec des ajustements d'étanchéité (2, 3) refroidis par un milieu réfrigérant et d'un organe d'arrêt disposé mobile dans le boîtier (1), refroidi par un milieu réfrigérant, et à l'exception des ajustements d'étanchéité de boîtier (2, 3) et des faces d'étanchéité (6, 7) à l'organe d'arrêt (4), toutes les faces venant en contact avec le gaz chaud sont pourvues d'un revêtement réfractaire (15, 16), caractérisé en ce qu'au moins toutes les faces non refroidies venant en contact avec le gaz chaud du dispositif d'arrêt sont pourvues d'une isolation additionnelle hautement calorifuge (17) qui est disposée entre le revêtement réfractaire (15, 16) et la construction métallique.

2. Dispositif selon la revendication 1, caractérisé en ce que l'isolation additionnelle hautement calorifuge (17) est constituée de nattes minces en fibres minérales.

3. Dispositif d'arrêt selon les revendications 1 et 2, dans lequel l'organe d'arrêt (4) est réalisé sous forme de registre déplaçable linérairement, et le boîtier (1) est pourvu d'un capot (10) pourvu d'un revêtement réfractaire dans lequel le registre peut être inséré dans la position d'ouverture, caractérisé en ce que le capot (10) est également pourvu de l'isolation additionnelle hautement calorifuge (17) entre le revêtement réfractaire et la construction métallique.

4. Dispositif selon l'une des revendications 1 à 3, caractérisé en ce qu'aussi les faces refroidies venant en contact avec le gaz chaud de l'organe d'arrêt (4) sont pourvues au moins partiellement d'une isolation additionnelle hautement calorifuge (17).

5. Dispositif selon l'une des revendications 1 à 4, caractérisé en ce que les faces qui se situent directement dans le flux de gaz chaud sont revêtues d'un béton réfractaire dense (15).

6. Dispositif selon l'une des revendications 1 à 4, caractérisé en ce que les faces qui ne se situent pas dans le flux de gaz chaud sont revêtues à l'intérieur d'un béton léger réfractaire (16).
